# EUROPEAN PATENT APPLICATION

(11) **EP 4 693 960 A1**
(43) Date of publication of application: **11.02.2026**
(21) Application number: 24193877.8
(22) Date of filing: 09.08.2024
(51) Int. Cl.: H04B 17/309, H04W 52/14, H04W 52/24, H04W 52/36

(54) **UE, BS AND METHODS FOR DETERMINING UPLINK PATHLOSS**

(71) Applicant: Panasonic Intellectual Property Corporation of America, Torrance, CA 90504 (US)
(72) Inventor: ZEINEDDINE, Khalid, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

It is provided a user equipment, UE, device, comprising a transceiver which, in operation, receives reference signals and circuitry which, in operation, determines a downlink, DL, pathloss based on a set of one or more DL pathloss values measured from the reference signals, wherein the set of one or more measured DL pathloss values comprises at least one measured DL pathloss value different from a most recently measured DL pathloss value and determines an uplink, UL, pathloss based on the determined DL pathloss.

## Description

### BACKGROUND

### 1. Technical Field

The present disclosure relates to transmission and reception of signals in a communication system. In particular, the present disclosure relates to the determination of an uplink pathloss by a user equipment device.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

In an embodiment, the techniques disclosed herein feature: a user equipment, UE, device, comprising a transceiver which, in operation, receives reference signals and circuitry which, in operation, determines a downlink, DL, pathloss based on a set of one or more DL pathloss values measured from the reference signals, wherein the set of one or more measured DL pathloss values comprises at least one measured DL pathloss value different from a most recently measured DL pathloss value and determines an uplink, UL, pathloss based on the determined DL pathloss.

In another embodiment, the techniques disclosed herein feature: a base station, BS, comprising circuitry which, in operation, determines a configuration for a user equipment, UE, device and determines a pathloss offset value and a transmitter which, in operation, transmits the determined configuration to the UE. The configuration is determined by the BS to cause the UE to select performing one of at least two of the following procedures:
A) identifying the measured DL pathloss value of a set of one or more measured DL pathloss values that is measured at a time closest to a time at which the pathloss offset value is determined by the BS; and determining a DL pathloss as the identified measured DL pathloss value of the set of one or more measured DL pathloss values;
B) identifying the measured DL pathloss value of a set of one or more measured DL pathloss values that is measured at a time closest to the time at which the pathloss offset value and later than the time at which the pathloss offset value is determined by the BS;
C) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
D) determining a DL pathloss as an average of measured pathloss values of a set of one or more measured DL pathloss values;
E) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein q is a number smaller than or equal to 1 and larger than or equal to 0 (i.e. a number from an interval [0,1]) and t_{update} is the time at which the pathloss offset value is determined by the BS. It is noted that implementations are possible in which q is a number between -1 and 1 (and including -1 and 1). The present disclosure is not limited to a specific weight range. The weights may sum up to 1 so that the averaged pathloss has the correct value range. It is noted that q may be a real number represented by any computer arithmetics; and
F) determining a DL pathloss as a measured DL pathloss value;
for determining an uplink, UL, pathloss based on the determined DL pathloss.

In another embodiment, the techniques disclosed herein feature: a method of determining an uplink, UL, pathloss carried out by a user equipment, UE, device, comprising the steps of receiving reference signals, determining a downlink, DL, pathloss based on a set of one or more DL pathloss values measured from the reference signals, wherein the set of one or more measured DL pathloss values comprises at least one measured DL pathloss value different from a most recently measured DL pathloss value and determining an uplink, UL, pathloss based on the determined DL pathloss.

In another embodiment, the techniques disclosed herein feature a method of configuring a user equipment device, UE, carried out by a base station, comprising the steps of determining a configuration for a user equipment, UE, device, determining a pathloss offset value and transmitting the determined configuration to the UE device. The configuration is determined by the BS to cause the UE device to select performing one of at least two of the following procedures:
A) identifying the measured DL pathloss value of a set of one or more measured DL pathloss values that is measured at a time closest to a time at which the pathloss offset value is determined by the BS; and
   determining a DL pathloss as the identified measured DL pathloss value of the set of one or more measured DL pathloss values;
B) identifying the measured DL pathloss value of a set of one or more measured DL pathloss values that is measured at a time closest to the time at which the pathloss offset value and later than the time at which the pathloss offset value is determined by the BS;
C) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
D) determining a DL pathloss as an average of measured pathloss values of a set of one or more measured DL pathloss values;
E) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined by the BS; and
F) determining a DL pathloss as a measured DL pathloss value.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Fig. 1**: is a block diahram that shows an exemplary architecture for a 3GPP NR system;
- **Fig. 2**: is a block diagram that shows an exemplary topology of a communication system with uplink and downlink TRPs located in different respective locations;
- **Fig. 3**: is a block diagram that illustrates an exemplary UE device;
- **Fig. 4**: is a block diagram that illustrates an exemplary base station;

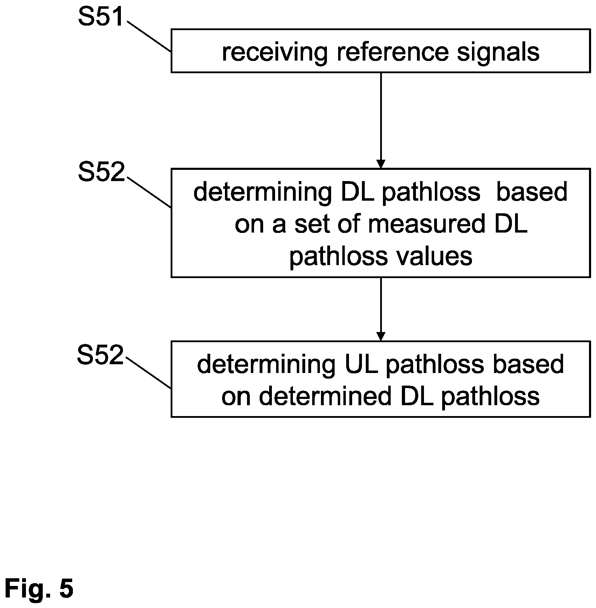

- **Fig. 5**: is a flow diagram that illustrates a procedure of UL pathloss determination performed by a UE device;
- **Fig. 6**: is a flow diagram that illustrates an exemplary implemenation of the procedure of UL pathloss determination performed by a UE device illustrated in Fig. 4;

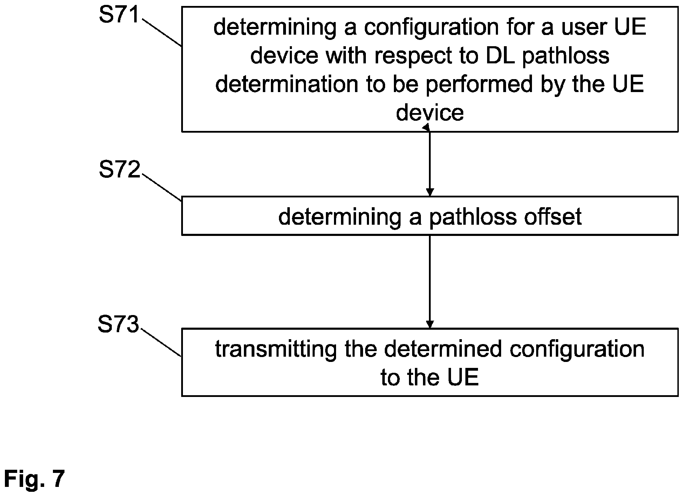

- **Fig. 7**: is a flow diagram that illustrates a procedure of configuration of a UE device with respect to DL pathloss determination to be performed by the UE device; and
- **Fig. 8**: is a block diagram that shows exemplary functional split options in 5G O-RAN.

### DETAILED DESCRIPTION

Particularly, there is a need for an improved uplink pathloss estimation by a user equipment, UE, device, for example, in the context of communication of the UE device with a (stationary) node of a communication system via a downlink channel and communication of the UE device with another (stationary) node of the communication system via an uplink channel. A measured downlink pathloss is taken as an estimation of the uplink pathloss or the estimation of the uplink pathloss is carried out by the UE based on a measured downlink pathloss and pathloss offset.

However, in particular, in deployment scenarios of communication of the UE device with multiple transmission reception points, TRPs, that may be on different locations, both approaches may fail to accurately estimate the uplink pathloss.

### 5G NR system architecture and protocol stacks

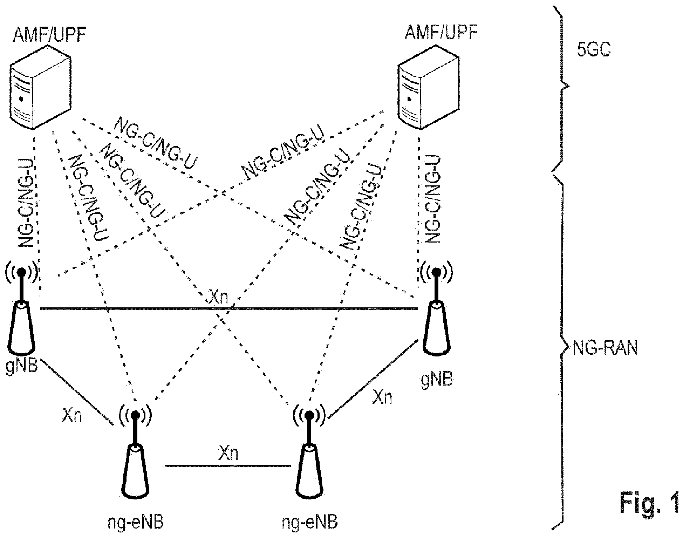

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### RRC connection setup and reconfiguration procedures

Interactions between a UE, gNB, and AMF (an 5GC entity) in the context of a transition of the UE from RRC_IDLE to RRC_CONNECTED for the NAS part are described (see 3GPP TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Exemplary Applications in Network and UE

The present disclosure addresses uplink, UL, pathloss estimation by a UE device (mobile station, mobile node) of a communication network wherein the UE communicates with one or more stationary nodes (base stations, gNBs, transmission reception points, TRP, etc). The communication network may, for example, implement new radio access technology envisioned for the 5G mobile communication systems, but may also be used in LTE mobile communication systems, 6G mobile communication systems and other wireless or wired communication system. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a user equipment (UE) device or mobile station or mobile node or user terminal is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" or TRP here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE device and the base station node is typically standardized and may be defined by different layers, such as PHY, MAC, RRC etc. (see description above).

### Exemplary Topologies and Communication Scenarios

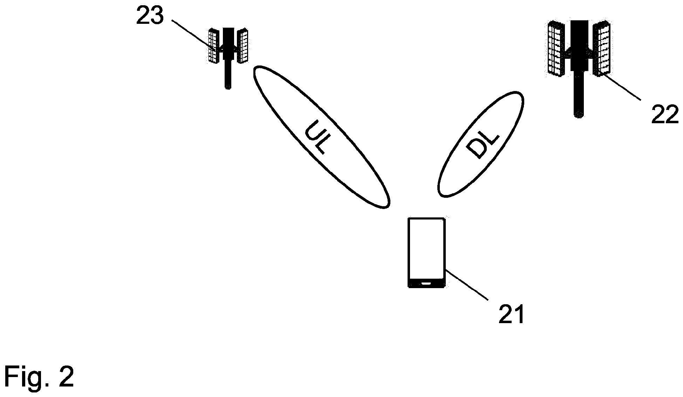

An exemplary topology to which the techniques disclosed herein may be suitably applied is illustrated in Fig. 2 wherein a base station 22 communicates with a UE device 21 via a downlink (DL) and the UE device 21 communicates with a transmission reception point (TRP) 23 different from the base station 22 via an uplink (UL). For example, the UE device 21 may communicate also with the base station 22 via an uplink (UL). For example, the UE device 21 may communicate also with other TRPs not shown in Fig. 2. Fig. 2 shows merely an exemplary and simplified topology. In general, the present disclosure is not limited to such topology. For example, a UE 21 might also establish at the same time a DL/UL channel to the main base station like in legacy systems, and another UL channel to the UL TRP. This means that multiTRP (mTRP) on the UL may be used.

The UE device 21 measures/estimates DL pathloss from reference signals provided by the base station 22. The DL pathloss is used by the UE device 21 for determining transmit power for PUSCH, PUCCH and SRS. Further, DL pathloss is used by the UE device 21 for determining power headroom for power headroom reporting (PHR). Power headroom is the difference between the maximum per carrier transmit power P_{CMAX,c} configured by the UE device 21 (and defined, for example, in Section 8-1 of 3GPP TS 38.101-1, Section 8-2 of 3GPP TS 38.101-2 and Section 8-3 of 3GPP TS 38.101-3) and the scheduled PUSCH transmit power used by the UE device 21. PHRs can be transmitted via MAC-CE from the UE device 21 to the base station 22 for uplink scheduling, for example, selection of modulation, coding scheme and bandwidth allocation. PHRs can be transmitted periodically or triggered when a change in downlink pathloss is greater than a threshold (for example, *phr-Tx-PowerFactorChange,* as defined in 5G; NR; Medium Access Control (MAC) protocol specification (3GPP TS 38.321 version 15.11.0 Release 15). One can distinguish between Types 1, 2, and 3 PHRs: Type 1 reflects power headroom assuming PUSCH-only transmission on the carrier (actual and virtual transmission), Type 2 reflects the power headroom assuming simultaneous PUSCH and PUCCH reporting and Type 3 is used to handle SRS switching, *i.e.*, SRS transmissions on an uplink carrier when the UE device 21 is not configured to transmit PUSCH.

Asymmetric DL sTRP / UL mTRP deployment scenarios, for example, assuming intra-band intra-DU non-co-located mTRP scenarios (cf. RP23-407; RAN#102, Edinburgh, UK, 11 - 15 December 2023) may implement the techniques disclosed herein. In such scenarios, the following may hold: When a UL TCI state associated with a pathloss offset (*i.e.*, difference between DL pathloss and UL pathloss; provided by base station) is applied for the PUSCH/PUCCH/SRS transmission, the UE shall calculate the Tx power of the PUSCH/PUCCH/SRS based on the DL pathloss RS and pathloss offset associated with this UL TCI state. For the association between pathloss offset and joint/UL TCI state, one PL offset value is configured in a joint or UL TCI state by RRC, where different pathloss offset values can be configured to different joint or UL TCI states. A MAC CE can update the pathloss offset value(s) for joint or UL TCI state(s).

### Multiple transmission and reception points

The physical layer in NR may provide multi-antenna operation such as MIMO (multiple input, multiple output) which may, for instance, include the use of plural or multiple transmission and reception points (multi-TRP or mTRP, as opposed to single-TRP or sTRP). For instance, a user equipment may receive data from plural TRPs (transmission and reception points), wherein the plural-TRPs may be controlled by the same or different network nodes. The terms multi-point transmission or coordinated multi-point transmission (CoMP) may also be used for multi-TRP communication including multi-TRP transmission.

In 3rd generation partnership project (3GPP) in new radio (NR) Rel. 15, basic support for multiple transmission and reception point (multi-TRP) was specified. In NR Rel. 16 multi-TRP may further be enhanced in accordance with a new work item on NR MIMO (cf. RP-182067, 'Revised WID (work item description): Enhancements on MIMO for NR', Samsung, 3GPP TSG RAN (Technical Specification Group Radio Access Network) Meeting #81, Gold Coast, Australia, Sept 10 - 13, 2018).

For instance, multi-TRP operation may be performed by a gNB having different antenna panels or radio heads corresponding to the TRPs and different radio frequency units operating with the respective antennas.

Moreover, in multi-TRP, several options are conceivable with respect to the positional relationship between TRPs, and the distance between two TRPs may vary. For instance, the TRPs may be close, so that a UE receives signals from these TRPs from a similar angle. However, TRPs may also be located at a rather far distance from each other, for instance at remote locations of a network cell. A UE being served by the two TRPs may receive and transmit the signaling from and to the respective TRPs on uncorrelated channels. Accordingly, gains in channel diversity may be optimally utilized.

### Transmission Configuration Indication (TCI) states

Using a DL channel, the gNB indicates to the UE a list of new (indicated) TCI states. Such indication may be represented by a bit sequence, e.g. a TCI codepoint. A TCI state in such a codepoint may indicated a UL, DL or joint UUDL (beam correspondence) spatial (transmission) direction.

A list (a subset) of TCI states to activate/deactivate is configured by a bitmap. If a bit in a specific location is set to be '1', it means that it activates the TCI state mapped to the position of the bit. If the bit is set to be '0', it means that it deactivates the TCI state mapped to the position of the bit.

The list of bit position that are set to be '1' is assigned to a small table called codepoint and the max size of the codepoint is 8. It mean that only up to 8 bit fields in this MAC CE can be set to be '1'. The position of '1' bits may be assigned to codepoint in increasing order.

RRC signaling (from a base station to a UE) is used to configure up to 128 TCI states for the PDSCH and up to 64 TCI states for the PDCCH. All TCI states are deactivated by default after configuration and after a handover.

In DCI format 1-1 (section 7.3.1.2.2 of 3GPP TS 38.212 V15.2.0), which is used for PDSCH scheduling, includes a field called transmission configuration indication (TCI) that is used to indicate one of the eight TCI states using 3 bits, if configured. A UE may be configured with a list of up to M TCI states out of the available TCI states (i.e. the above mentioned 128 or 64 configured TCIs) configured by parameter PDSCH-Config which is configured in the RRC (Radio Resource Control) signaling which is an example of a higher layer signaling in NR. By higher here a layer higher than the physical layer is meant. In the example of the above mentioned DCI format 1-1, M = 8 in correspondence with the maximum number of 3 bits in the TCI field. Each TCI state contains parameters for configuring a quasi co-location relationship between one or two downlink reference signals and the DM-RS ports of the PDSCH.

### Time-restricted pathloss determination

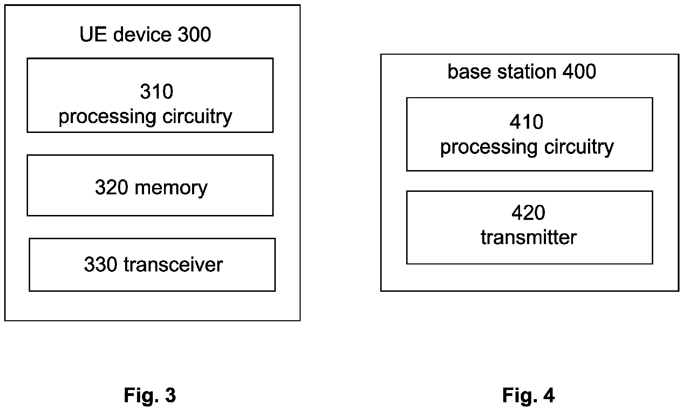

As exemplarily illustrated in Fig. 3, a user equipment, UE, device 300 is provided. The UE 300 comprises a transceiver 330 which, in operation, receives reference signals (for example, sent by a base station with a known transmission power) and circuitry 310. The circuitry 310, in operation, determines a (time-restricted) downlink, DL, pathloss based on a set of one or more DL pathloss values measured from the reference signals (before determining the DL pathloss), wherein the set of one or more measured DL pathloss values comprises at least one measured DL pathloss value different from a most recently measured DL pathloss value. Furthermore, the circuitry 310 of the UE device 300, in operation, determines an uplink, UL, pathloss based on the determined DL pathloss. Particularly, each measurement of the DL pathloss is based on a received reference signal.

The thus determined UL pathloss can be used for UL transmission procedures to be carried out by the UE device 300. The thus determined UL pathloss, for example, with respect to an UL to one of a plurality of TRPs, might be used by the UE device 300 for determining transmit power for PUSCH, PUCCH and SRS or for determining power headroom for power headroom reporting in order to transmit the respective signals via an UL channel by means of the transceiver 330 with suitable power levels. Further, the thus determined UL pathloss can be used for triggering power headroom reporting (PHR) by the UE 300. However, the present disclosure is not limited thereto and the UL pathloss may be used for any other purposes, since it may provide a more accurate UL pathloss estimation based on the DL pathloss estimation even in cases of DL TRP and UP TRP being located in spatially different locations.

In general, in all of the embodiments and aspects decribed herein the DL pathloss measurement values may be higher layer filtered values (as known in the art). In more detail, the DL pathloss measurement values *PL_{b,f,c} (qd)* (or PL_{DL} for short) in dB may be obtained by the UE device 300 using DL reference signals (RS) of index qd for the active DL BWP of carrier f of serving cell c provided by a base station, *i.e., PL_{DL}* = *referenceSignalPower* - *higher layer filtered RSRP value*, wherein referenceSignalPower is determined by ss-PBCH-BlockPower (power at which base station transmits the reference signal). For simplicity, *PL_{DL}* = *referenceSignalPower* - *higher layer filtered RSRP value* is comprised by the term DL pathloss measurement value in accordance with the commonly used wording in the art. RSRP herein refers to Reference Signal Received Power.

For instance, in context of NR, the filtered values may be determined (and reported) according to the RRC protocol (a layer 3 control protocol). However, in general, the present disclosure is not limited to a specific layer or protocol specification or presence/kind of filtering. More specifically, the DL pathloss and pathloss offset can also be determined and/or applied based on unfiltered values and/or for measurements collected at any layer (e.g. physical or MAC or the like) while still providing the advantages.

The DL pathloss might be determined based on a history of measured DL pathloss values. The determination of the DL pathloss can be done with a high flexibility (see also description below) and it can reliably be avoided that some measured DL pathloss value is used for determining the UL pathloss that is not suitable, for example, due to some movement of the UE device 300. For example, the procedure of UL pathloss determination is not restricted to use the most recently measured DL pathloss value when it is not suitable.

In other words, in this embodiment downlink pathlos (also denoted as PL_{DL} in the following) and pathloss offset (also denoted as ΔPL in the following) can be more representative of the same UE's position during mobility. This allows the UE to derive a more suitable UL pathloss estimation that can be used for uplink transmit power calculation, power headroom triggering and calculation.

### Examples of determining the relevant DL pathloss

The UE device 300 described above can comprise a memory 320 that stores a set of N measured DL pathloss values, wherein N (≥ 1) is a positive integer. For example, the UE, at a present time instant t, have knowledge of an already measured set D of DL pathloss values D = {PL_{DL}(t₀), ... , PL_{DL}(t_{N-1})} at times t₀< t₁,... < t_{N-1} ≤ t.

The value of N may be adjustable. For instance, it may be selected on the UE side and the selection may be up to UE implementation (network does not need to have knowledge of the value). Alternatively, it does not have to be selected, but it may be fixed. Adjustability at the UE side only provide for less signaling and fixed value may simplify implementation.

In another example, the value of N may be configurable by the network. For example, N may be defined by at least one of a UE capability and higher layer (for example, layer 3) configuration of the UE.

The set D_sub of one or more measured DL pathloss values used to determine the downlink pathloss as described above may be a subset of the set D of N measured DL pathloss values.

It is noted that the one or more measured DL pathloss values being a subset of the set of N measured DL pathloss values may comprise the option that the subset D_sub is equal to the set of N measured DL pathloss values in the set D. In such case ||D_sub||≤ N (number of elements of the subset D_sub is less than or equal to N). However, the subset D_sub may also comprise less than N measured DL pathloss values. The measured pathloss values may (but do not have to) be higher layered filtered RSRP as mentioned above.

The UE has knowledge of the most recent network update to its pathloss offset value received at time t_{update} where t_{update} ≤ t denoted as PL_offset (t_{update}) or ΔPL (t_{update}). The pathloss offset update time instance t_{update} is between (and inclusive) the above mentiond t₀ and t_{N-1} (time instances between which the respective DL pathloss measurements are stored). In some exemplary implementations, t_{update} is within the time interval defined by the time instances of the subset D_sub, wherein ||D_sub||≤ N. ∥D_sub∥ may be denoted as M. M is smaller than N in some examples. Similarly as N, M may be configurable or fixed on UE side only, or it may be configurable by network and/or based on UE capabilities.

As mentioned above, the network update of pathloss offset can be conveyed for example via a MAC control element (CE). In this way, the present disclosure may be readily applicable to NR and its further developments. However, the present disclosure is not limited to such signaling and in general, the pathloss offset value may be updated in another layer such as a physical layer or RRC or the like.

Coming back to Fig. 3, the UE device 300 can be configured (by a base station) or it can flexibly decide based on its capability to use a number of measured DL pathloss values stored in the memory 320 for the determination of the DL pathloss and, thus, the UL pathloss based on the determined DL pathloss.

The UE uses a subset D_sub c D of measured DL pathloss values where ||D_sub||≤ N according to a specified procedure. The present disclosure is not limited to any specific procedure. Some examples of the procedure are provided below.
1. The UE uses the most recent pathloss measurement PL_{DL}(t_{N}), therefore D_sub = {PL_{DL}(t_{N})}. One of the advantages of this approach is that the PL_{DL} is best up to date. However, in this option, PL_{DL} and ΔPL may not be well matching, e.g. if ΔPL is outdated.
2. The UE uses the pathloss measurement taken at the time tₙ closest to t_{update} , where tₙ can be earlier or later than t_{update}, therefore D_sub = {PL_{DL}(tₙ)}. In other words, the subset has exactly one element which is a measured pathloss closest to the time instance of the updated pathloss offset. This option can facilitate that PL_{DL} and ΔPL are most matching in time, e.g., in the scenario of Fig. 2, the pathloss offset reflecting the difference between the pathloss from the UE to the basestation and the pathloss from the UE to the UL TRP.
3. The UE uses the pathloss measurement determined at the time tₙ closest to t_{update} where tₙ ≥ t_{update} (D_sub = {PL_{DL}(tₙ)}), and if not possible, it picks the most recent value PL_{DL}(t_{N}) (D_sub = {PL_{DL}(t_{N})}. This approach takes PL_{DL} at a time instance (with a time stamp) that is close to ΔPL while favoring new PL measurements.
4. The UE uses D_sub as the pathloss measurements occuring in a time window tₛₜₐᵣₜ ≤ t_{update} ≤ t_{finish} where tₛₜₐᵣₜ and t_{finish} are reported as a UE capability or configured by a higher layer. This approach takes into account more measurement information of pathloss determined at different time instances.
5. The UE uses D_sub according to a higher layer configuration or UE capability to select (determine) one of filters mentioned above in options 1-4. It is noted that the selection does not have to be out of all of the above options 1-4 and that further options may be added. In general, the higher layer configuration or UE capability may indicate one among at least two options. The at least two options may include at least one of the above mentioned options 1-4.

According to the option 2 above, the UE device 300 is configured such that the circuity 310, in operation, identifies the measured DL pathloss value from the set of one or more measured DL pathloss values as the one that is measured at a time closest (be it earlier or later) to the time at which the pathloss offset value is determined and determines the DL pathloss as the identified measured DL pathloss value of the set of one or more measured DL pathloss values.

For example, as mentioned above, the UE continuously collects measured DL pathloss values and stores in the memory 320 at least the set of one or more measured DL pathloss values (D_sub). This may be a set of already filtered measured values (e.g. as described above, determined at layer 3 measurement reporting). Out of these values, the temporally closest value to the most recent pathloss offset update is selected. The UE also receives (over the transceiver 330), configuration of the pathloss offset. It is noted that the pathloss offset may be configured by an RRC message (from the network to the UE). In some exemplary implementations that may be applicable to NR and it further developments, the pathloss offset is further updated (periodically or aperiodically) by the base station, for example, with a MAC CE. However, it is noted that the present disclosure does not presume any specific signaling layer or involvement of two different signaling layers. The signaling of pathloss offset may be done entirely on RRC layer or on MAC layer or another layer.

In option 2, the closest time instant may be earlier than the most recent pathloss offset update. In such case, measured DL pathloss value may be less up to date. In option 3, the UE device 300 UE device is configured such that the circuity 310, in operation, identifies the measured DL pathloss value of the set of one or more measured DL pathloss values that is measured at a time closest to the time at which the pathloss offset value is determined. Then the circuitry 310 determines the DL pathloss as the identified measured DL pathloss value of the set of one or more measured DL pathloss values, only if the identified measured DL pathloss value of the set of one or more measured DL pathloss values is measured latter than or at the time at which the pathloss offset value is determined. The circuitry 310 determines the DL pathloss as the most recently measured DL pathloss value of the set of one or more measured DL pathloss values, only if the identified measured DL pathloss value of the set of one or more measured DL pathloss values is measured earlier than the time at which the pathloss offset value is determined. In other words, this approach selects a measured DL pathloss value (from the subset D_sub) with a time instance (e.g. based on a time stamp) close to the time instance of the pathloss offset value while, on the hand, latest DL pathloss measurements are favoured which might increase accuracy of the determination of the UL pathloss.

It is noted that when referring herein to time instances of the DL PL measurements, an exemplary implementation of a memory stores the measured DL PL values associated with respective time stamps. A time stamp is an indication of a time instance at which the DL PL measurement value was measured or determined.

Combinations of options 2 and 3 are also possible that may decide whether a DL PL measurement value older than the most recent PL offset update can be taken. The decision may be performed based on the time difference between the most recent PL offset update and said DL PL measuremet value or based on other criteria (e.g. deployment scenario, mobility, or the like).

In summary, in option 3, the UE identifies the measured DL pathloss value of the set of one or more measured DL pathloss values that is measured at a time closest to the time at which the pathloss offset value and later than the time at which the pathloss offset value is determined. The identified measured is then determined as the DL pathloss value to be used together with the most recent pathloss offset. It is noted that this may be implemented in various ways within the UE. For example, the subset D_sub may already be limited so that the subset only includes DL PL measurement values following the most recent pathloss update. Alternatively, the subset may include preceding and following values. The identification and and determination may be performed in one single step.

In option 4, the set D_sub of one or more measured DL pathloss values consists of DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration (for example, layer 3) of the UE and t_{update} denotes the time at which the pathloss offset value is determined. This allows for flexibly taking into account a relatively high number of DL pathloss measurements. The DL pathloss is thus a set of measured DL pathloss values which may be the D_sub set itself or a subset of it (that is not the complete D_sub set).

The present disclosure is not limited to the above mentioned options of selecting specific one element of D_sub or using a plurality of elements of D_sub. According to an example, the UE (circuitry 310) calculates DL_PL_restrict as a function *f_DL* of the set D-sub.

For instance, if IID_subll=1, then the UE uses the only value in the set as DL_PL_restrict. Otherwise, DL_PL_restrict = f DL(D_sub). Some exemplary options for the function f_DL are provided below:
a) The function may be an average. Specifically, *f_DL* = average (D_sub) when there are multiple values in D_sub (||D_sub||>1). In case of single value in D_sub (||D_sub||=1), *f_DL* = D_sub. Accordingly, a simple averaging may be used to compensate for slow update of ΔPL. The averaging may be particularly suitable if DL pathloss does not change too fast.
b) The function *f_DL* is a weighted average of D_sub where the weight of PL_{DL}(tₙ) ε D_sub is proportional to q^(|tₙ - t_{update}|) for 0≤q≤1 ("^" standing for "power to"). Consequently, the bigger weights can be applied to the pathloss values closer to t_{update}. This appies more weight on downlink pathloss values with a time stamp closer to that of ΔPL. In this way, a more suitable values are obtained if the DL pathloss changes faster.
c) The UE is configured (e.g. by a higher layer) to pick one of the multiple configured filtering functions (e.g. a), b), and/or another filtering approach). The UE may be also configured to select the approach a) or b) according to channel characteristics or own measurements or the like.

According to option a), the circuity 310 of the UE 300, in operation, determines the DL pathloss as an average of the measured pathloss values of the set D_sub of one or more measured DL pathloss values. The averaging procedure allows for compensating slow updates of the provided pathloss offset. According to an option b), the averaging is a weighted averaging. For example, weights applied to DL pathloss values measured at time instances tₙ are selected according to their distance from the t_{update}. The lower the distance, the higher the weight. The weights may be inverse proportional to the distance. In general, the weights can be set according to a desired filter function that is not necessarily (but may be) linear. Such kind of weighted averaging puts more weight on downlink pathloss values with a time stamp closer to that of the pathloss offset while penalizing values measured long before or after the time at which the provided pathloss offset is determined. It is noted that the function does not have to be average or weighted average. For example, it may be median or the like.

Concerning the value of q mentioned above, it is noted that in some implementation 0≤q≤1. In some embodiments, 0 is not necessarily included. In general, as is clear to those skilled in the art the weights may sum up to 1 in order to obtain as the weighted average a pathloss in appropriate value range.

In option c), the circuit 310 of the UE 300, in operation, selects one of the procedures described as options 1 to 5 and a) to c). Selection can be governed by the capability of the UE 300 or determined by a higher level configuration of the UE 300 by the base station (e.g. via RRC protocol). However, the UE may be also configured to select an appropriate option among options including one or more of options 1-5 and a-c. This may be performed according to the current mobility status, channel quality, battery power, or the like. Thus, the actual determination of the DL pathloss and, thus, the UL pathloss based on the determined DL pathloss can be realized with a high flexibility that allows taking into account the actual communication circumstances (data traffic, interferences, etc.).

### Exemplary uplink transmission procedures

As mentioned above, after selecting the matching DL PL measurement value and PL offset, the UE calculates an UL pathloss value therefrom for using in an uplink transmission procedure. The calculated UL pathloss may be used for any uplink transmission procedure. It may be used for any purposes.

Whenever the UE 300 needs to use (e.g. compare) the DL pathloss value and the pathloss offset value to determine the uplink pathloss, the UE uses the restricted (adjusted) downlink pathloss value DL_PL_restrict instead of the most recent DL pathloss value PL_{DL}(t_{N}) (as is done e.g. in a legacy NR system). Then the uplink pathloss is calculated as PL_{UL} = DL_PL_restrict - PL_offset (t_{update}). The uplink pathloss may be provided in the units of dB.

Such approach enbles that PL_{DL} and ΔPL are representative of the same UE's position during mobility. This allows the UE to derive an UL pathloss that can be used for uplink transmit power calculation, power headroom triggering and calculation. For example, the circuity 310, in operation, determines the UL pathloss based on a pathloss offset value determined and provided by a network device (for example, a base station) with respect to another network device (for example, a TRP). This may be in a scenario as shown in Fig. 2 or in another scenario. The base station and the TRP may belong to the same DU. However, the present disclosure is not limited to such scenario.

According to an implementation, the circuitry 310, in operation, determines the UL pathloss by subtracting the pathloss offset value provided by the network device from the determined DL pathloss. The pathloss offset value may be updated by the network device on a regular or periodic basis and the UE device 300 is thus provided with the most updated pathloss offset values for accurate determination of the UL pathloss. It is noted that in this implementation, the UL pathloss is determined by subtracting the pathloss offset value provided by the network device from the determined DL pathloss. However, in general, UL pathloss may be obtained by comparing the pathloss offset value provided by the network device with the determined DL pathloss. This does not have to be suntraction, it may be any kind of processing such as addition, comparison outputting which one is larger/smaller (as a binary value), or any other operation determining relation between the two values.

As a result, it can be facilitated that the determined DL pathloss and the provided pathloss offset are representative of (almost) the same position of the UE device 300 during movement of the same. This allows the UE device 300 to derive an UL pathloss that can be used for reliable uplink transmit power calculation for transmiting signals by means of the transceiver 330 as well as power headroom calculation and triggering of power headroom reporting (PHR) or the like.

The UE may use the calculated UL pathloss PL_{UL} in one or more of the following uplink transmission procedures. For that purpose, a previously used DL PL may be replaced with the calculated DL pathloss.
i. Use UL pathloss to calculate PUSCH transmit power. An example of calculating legacy PUSCH transmission power is in 3GPP TS 38.213. In general, the UL pathloss may be used for scheduling / adjusting own power of respective users for transmission of data in UL. The data may be uplink payload data.
ii. Use UL pathloss to calculate PUCCH transmit power. An example of legacy PUCCH transmission power is in 3GPP TS 38.213. In general, the UL pathloss may be used for scheduling / adjusting own power of respective users for transmission of data in UL. The data may be uplink control data.
iii. Use the DL PL with UL pathloss to calculate SRS transmit power. The SRS is an uplink reference signal transmitted to the base station periodically (in predetermined resources) or aperiodically.
iv. Use the DL PL to trigger Power Headroom Report, PHR reporting when the UL pathloss has changed more than *phr-Tx-PowerFactorChange* dB for at least one RS used as pathloss reference. Thus, the UE may replace the DL PL with UL pathloss to calculate Type 1 PHR based on an actual and reference PUSCH transmissions and to calculate Type 3 PHR based on an actual and reference SRS transmission. In general, the UL pathloss may be used for calculationg of the PHR. The PHR is then sent fro the uE to the BS.
v. Use the UL pathloss for two or more (or all) procedures I to iv.

In summary, the circuitry 310 of the UE 300, in operation, determines at least one of a physical uplink shared channel, PUSCH, transmission power, a physical uplink control channel, PUCCH, transmission power, a physical random access channel, PRACH, transmission power and a sounding reference signal, SRS, transmission power based on the determined UL pathloss. Due to the accurate determination of the UL pathloss according to the above described embodiments the signal power of signals to be transmitted by the UE 300 on an UL channel can be accurately determined in order to guarantee error free reception by an intended receiver (for example, a transmission reception point (TRP)).

In an exemplary implementation, the circuity 310 of the UE 300, in operation, calculates power headroom, PH, based on the determined UL pathloss and/or triggers power headroom reporting, PHR, when the determined UL pathloss differs from a previously determined UL pathloss by more than a threshold. When the PHR is triggered, it is aperiodically sent to the base station. Due to the accurate determination of the UL pathloss according to the above described embodiments the PH can be accurately determined and PHR can be suitably triggered in time. Specifically, it does not have to be transmitted regularly, so it may facilitate efficiency. However, the present disclosure is not limited to aperiodic triggering. The calculated uplonk pathloss may be used for PHR reported regularly and/or periorically.

The one or more measured DL pathloss values are measured for a pathloss of a DL from a base station to the UE device 300 and the UL pathloss is determined for a UL from the UE device to a transmission reception point, TRP, different from the base station over which the DL traffic is received at the UE side. The TRP can be one of a plurality of TRPs the UE 300 can communicate with over individual UL channels. As exemplarily illustrated in Fig. 4, it is provided a base station, BS, 400 comprising a processing circuitry 410 and a transmitter (or transceiver) 420. The circuitry 410, in operation, determines a configuration for a user equipment, UE, device and it determines a pathloss offset value. The transmitter 420, in operation, transmits the determined configuration to a UE device.

### Base station / TRP side

The uplink pathloss is calculated and used on the UE side. However, the present disclosure is not limited to UE implementations, but also provides a BS. Specifically, the base station (or a network node) may be adapted to configure the UE for calculating the UL pathloss.

For example, the configuration (e.g. one of the below approaches A to F) is determined by the BS 400 and an indication of the configuration is transmitted from the BS to the UE device to cause the UE device, for example, the UE device 300, to select performing one of at least two of the following procedures:
A) identifying the measured DL pathloss value of a set of one or more measured DL pathloss values that is measured at a time closest to a time at which the pathloss offset value is determined by the BS; and
   determining a DL pathloss as the identified measured DL pathloss value of the set of one or more measured DL pathloss values;
B) identifying the measured DL pathloss value of a set of one or more measured DL pathloss values that is measured at a time closest to the time at which the pathloss offset value and later than the time at which the pathloss offset value is determined by the BS;
C) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
D) determining a DL pathloss as an average of measured pathloss values of a set of one or more measured DL pathloss values;
E) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined by the BS; and
F) determining a DL pathloss as a measured DL pathloss value;
   for determining an uplink, UL, pathloss based on the determined DL pathloss.

For example, the base station 400 communicates with the UE device 300 described in any of the above-mentioned embodiments and examples. In this case, the BS 400 establishes a DL channel to the UE device 300 and transmits the determined configuration by means of the transmitter 420 to the transceiver 330 of the UE device 300. Moreover, the BS 400 transmits the determined pathloss offset by means of the transmitter 420 to the transceiver 330 of the UE device 300. In addition, the BS 400 transmits the reference signals by means of the transmitter 420 to the transceiver 330 of the UE device 300 such that the UE 300 can measure the DL pathloss from the received reference signals.

Alternatively, or in addition to indicating the UL pathloss calculation procedure, the base station may configure the UE with other parameters relating to the UL PL calculation, such as the above mentioned N and/or M (number of pathloss measurement values). In option E) above, the weights for the weighted averaging may be configured by the base station and/or the type of the function used to calculate the UL PL (such as average, median, weighted average or the like). The configuration messages may be at any layer. Nevertheless, in the contect of NR, the RRC protocol may be suitable.

According to an embodiment, a communication system is provided, comprising the UE device 300 and the BS 400 as described in any of the above mentioned examples of uE and BS respectively. This communication system may comprise one or more TRPs in uplink. It is noted that the present disclosure is readily applicable to the current NR. However, it is not limited thereto. The UL path determination may be used in any scenarios, e.g. involving one or more TRPs in downlink or the like.

### Exemplary methods

The functions performed by the circuitry as described above may be also embodied as respective methods.

For example, a method of UL pathloss determination carried out by a UE device, for example, the UE device 300 described with reference to the embodiments above. The method comprises receiving S51 reference signals by the UE device and determining S52 a downlink, DL, pathloss based on a set of one or more DL pathloss values measured from the respective reference signals, wherein the set of one or more measured DL pathloss values comprises at least one measured DL pathloss value different from a most recently measured DL pathloss value. Further, the method comprises determining S53 an uplink, UL, pathloss based on the determined DL pathloss. The method can be implemented in the UE device 300 described in any of the embodiments herein.

The method can be supplemented by the step of determining at least one of a physical uplink shared channel, PUSCH, transmission power, a physical uplink control channel, PUCCH, transmission power, a physical random access channel, PRACH, transmission power and a sounding reference signal, SRS, transmission power based on the determined UL pathloss and transmitting the signal the power of which is determined to a destination. Further, the method can be supplemented by the step(s) of calculating power headroom, PH, based on the determined UL pathloss and/or triggering power headroom reporting, PHR, when the determined UL pathloss differs from a previously determined UL pathloss by more than a (predefined) threshold.

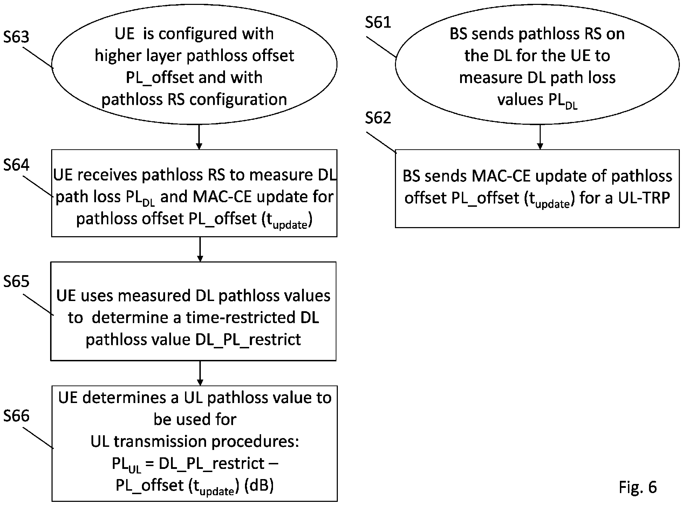

A particular implementation of the method supplemented by base station action is illustrated in Fig. 6. The left column of Fig. 6 shows the perspective of the UE device and the right columns shows the perspective of the base station. The UE device can be the UE device 300 illustrated in Fig. 3 and the base station can be the BS 400 illustrated in Fig. 4. The method illustrated in Fig. 6 might be implemented in the communication system including the UE and the BS described therein. The BS may configure the UE to employ one or more of the above options of obtaining the UL pathloss and possibly further parameters related to determination of the UL pathloss.

On the base station side, the method illustrated in Fig. 6 comprises the step of sending S61 a pathloss reference signal (RS) on the DL for the UE to measure DL path loss values PL_{DL}. Furthermore, the base station sends S62 MAC-CE updates of pathloss offset values PL_offset (t_{update}) on a regular, for example, periodic, basis for an UL-TRP.

On the UE device side, the UE device is configured S63 with higher layer pathloss offset PL_offset and with pathloss RS configuration provided by the base station. In step S64 the UE device receives pathloss RS to measure DL pathloss PL_{DL} and MAC-CE update for pathloss offset PL_offset (t_{update}) from the base station. Particularly, the UE device may determine *PL_{DL}* = *referenceSignalPower - higher layer filtered RSRP value* as described above with reference to Fig. 3.

In step S65 the UE device uses the measured DL pathloss values to determine a time-restricted DL pathloss value DL_PL_restrict. For determining the time-restricted DL pathloss value DL_PL_restrict the UE (its circuitry)may select and carry out one of the procedures described with reference to options 1-5 and a)-c) above.

After determination of the time-restricted DL pathloss value DL_PL_restrict the UE determines S66 a UL pathloss value PL_{UL} to be used for UL transmission procedures according to PL_{UL} = DL_PL_restrict - PL_offset (t_{update}) (dB).

According to an embodiment, it is provided a method of configuring a UE device, for example, the UE device 300 described with reference to the embodiments above, carried out by a base station, for example, the BS 400 described with reference to the embodiment above.

The method comprises determining S71 a configuration for a user equipment, UE, device with respect to DL pathloss determination to be performed by the UE device. Furthermore, the method comprises determining S72 a pathloss offset value. Furthermore, the method comprises transmitting S73 the determined configuration to the UE device. The configuration is determined by the BS to cause the UE device to select performing one of at least two of the following procedures:
A) identifying the measured DL pathloss value of a set of one or more measured DL pathloss values that is measured at a time closest to a time at which the pathloss offset value is determined by the BS; and
   determining a DL pathloss as the identified measured DL pathloss value of the set of one or more measured DL pathloss values;
B) identifying the measured DL pathloss value of a set of one or more measured DL pathloss values that is measured at a time closest to the time at which the pathloss offset value and later than the time at which the pathloss offset value is determined by the BS;
C) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
D) determining a DL pathloss as an average of measured pathloss values of a set of one or more measured DL pathloss values;
E) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined by the BS; and
F) determining a DL pathloss as a measured DL pathloss value;
   for determining an uplink, UL, pathloss based on the determined DL pathloss.

The method can be implemented in the BS 400 described above and with reference to Fig. 4. Further, it can be suitably combined with the method for the UE described above and the implementation thereof.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

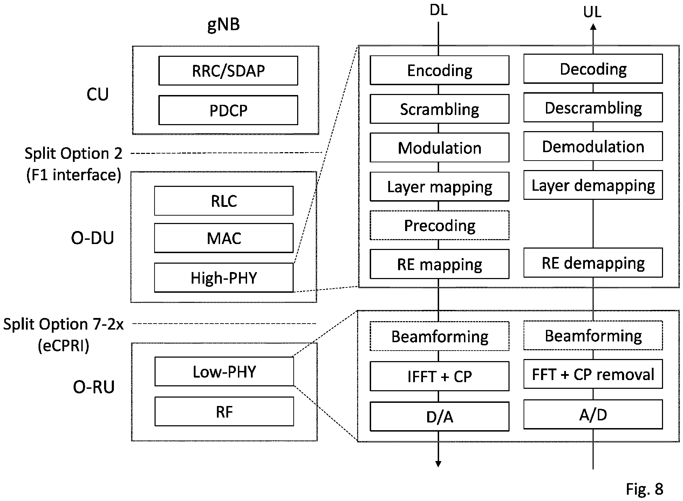

Fig. 8 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result. CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further aspects

In the following, some non-limiting aspects of the present disclosure will be summarized.

According to a first aspect, a user equipment, UE, is provided, comprising a transceiver and circuitry. The transceiver is configured to receive reference signals. The circuitry, in operation, determines a downlink, DL, pathloss based on a set of one or more DL pathloss values measured from the reference signals, wherein the set of one or more measured DL pathloss values comprises at least one measured DL pathloss value different from a most recently measured DL pathloss value; and determines an uplink, UL, pathloss based on the determined DL pathloss.

According to a second aspect, further to the first aspect, the UE further comprises a memory that stores a set of N measured DL pathloss values, wherein N is a positive integer defined by at least one of a UE capability and higher layer configuration of the UE; and wherein said set of one or more measured DL pathloss values is a subset of the set of N measured DL pathloss values.

According to a third aspect, further to the first aspect or second aspect, the circuitry, in operation, determines the UL pathloss by comparing a pathloss offset value determined and provided by a network device and the determined DL pathloss.

According to a fourth aspect, further to the third aspect, the circuity, in operation, identifies the measured DL pathloss value from the set of one or more measured DL pathloss values as the one that is measured at a time closest to the time at which the pathloss offset value is determined; and determines the DL pathloss as the identified measured DL pathloss value of the set of one or more measured DL pathloss values.

According to a fifth aspect, further to the third aspect, the circuity, in operation, identifies the measured DL pathloss value of the set of one or more measured DL pathloss values that is measured at a time closest to the time at which the pathloss offset value and later than the time at which the pathloss offset value is determined.

According to a sixth aspect, further to the third aspect, in the DL pathloss is determined based on the a set of one or more measured DL pathloss values consisting of DL pathloss values measured in a time interval tₛₜₐᵣₜ t_{update} ≤ t_{finish}, wherein tₛₜₐᵣₜ and t_{finish} are defined by at least one of a UE capability and a higher layer configuration of the UE, and t_{update} denotes the time at which the pathloss offset value is determined.

According to a seventh aspect, further to the first to third or sixth aspect, the circuity, in operation, determines the DL pathloss as an average of the measured pathloss values of the set of one or more measured DL pathloss values.

According to an eighth aspect, further to the first to third or sixth aspect, the circuity, in operation, determines the DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined.

According to a ninth aspect, further to any of the first to eighth aspect, the circuity, in operation, selects performing one of at least two of the procedures defined in claims 4 to 8 or determining the DL pathloss as the most recently measured DL pathloss value according to at least one of a UE capability and higher layer configuration of the UE.

According to a tenth aspect, further to any of the first to ninth aspect, the circuity, in operation, determines at least one of a physical uplink shared channel, PUSCH, transmission power, a physical uplink control channel, PUCCH, transmission power, a physical random access channel, PRACH, transmission power and a sounding reference signal, SRS, transmission power based on the determined UL pathloss.

According to an eleventh aspect, further to any of the first to tenth aspect, the circuity, in operation, calculates power headroom, PH, based on the determined UL pathloss and/or triggers power headroom reporting, PHR, when the determined UL pathloss differs from a previously determined UL pathloss by more than a threshold.

According to a twelfth aspect, further to any of the first to eleventh aspect, the one or more measured DL pathloss values are measured for a pathloss of a DL from a base station to the UE and the UL pathloss is determined for a UL from the UE to a transmission reception point, TRP, different from the base station.

According to a 13-th aspect, a base station, BS, is provided comprising circuitry which, in operation, determines a configuration for a user equipment, UE, device; and determines a pathloss offset value. The BS also comprises a transmitter which, in operation, transmits the determined configuration to the UE. The configuration is determined by the BS to cause the UE to select performing one of at least two of the following procedures:
A) identifying the measured DL pathloss value of a set of one or more measured DL pathloss values that is measured at a time closest to a time at which the pathloss offset value is determined by the BS; and determining a DL pathloss as the identified measured DL pathloss value of the set of one or more measured DL pathloss values;
B) identifying the measured DL pathloss value of a set of one or more measured DL pathloss values that is measured at a time closest to the time at which the pathloss offset value and later than the time at which the pathloss offset value is determined by the BS;
C) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
D) determining a DL pathloss as an average of measured pathloss values of a set of one or more measured DL pathloss values;
E) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined by the BS; and
F) determining a DL pathloss as a measured DL pathloss value;
   for determining an uplink, UL, pathloss based on the determined DL pathloss.

According to a 14-th aspect, a communication system is provided, comprising the UE according to any of the first to twelfth aspect; and the BS according to the thirteenth aspect.

According to a 15-th aspect, a method of determining an uplink, UL, pathloss carried out by a user equipment, UE, device, comprising the steps of receiving reference signals; determining a downlink, DL, pathloss based on a set of one or more DL pathloss values measured from the reference signals, wherein the set of one or more measured DL pathloss values comprises at least one measured DL pathloss value different from a most recently measured DL pathloss value; and determining an uplink, UL, pathloss based on the determined DL pathloss.

According to a 16-th aspect, further to the 15-th aspect, N is a positive integer defined by at least one of a UE capability and higher layer configuration of the UE; and wherein said set of one or more measured DL pathloss values is a subset of the set of N measured DL pathloss values.

According to a 17-th aspect, further to the 15-th aspect or 16-th aspect, the circuity, in operation, determines the UL pathloss by comparing a pathloss offset value determined and provided by a network device and the determined DL pathloss.

According to a 18-th aspect, further to the 17-th aspect, the circuity, in operation, identifies the measured DL pathloss value from the set of one or more measured DL pathloss values as the one that is measured at a time closest to the time at which the pathloss offset value is determined; and determines the DL pathloss as the identified measured DL pathloss value of the set of one or more measured DL pathloss values.

According to a 19-th aspect, further to the 17-th aspect, the circuity, in operation, identifies the measured DL pathloss value of the set of one or more measured DL pathloss values that is measured at a time closest to the time at which the pathloss offset value and later than the time at which the pathloss offset value is determined.

According to a 20-th aspect, further to the 17-th aspect, in the DL pathloss is determined based on the a set of one or more measured DL pathloss values consisting of DL pathloss values measured in a time interval tₛₜₐᵣₜ t_{update} ≤ t_{finish}, wherein tₛₜₐᵣₜ and t_{finish} are defined by at least one of a UE capability and a higher layer configuration of the UE, and t_{update} denotes the time at which the pathloss offset value is determined.

According to a 21-st aspect, further to the 15-th to 17-th or 20-th aspect, the circuity, in operation, determines the DL pathloss as an average of the measured pathloss values of the set of one or more measured DL pathloss values.

According to a 22-nd aspect, further to the 15-th to 17-th or 20-th aspect, the circuity, in operation, determines the DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined.

According to a 23-rd aspect, further to any of the first to 22-th aspect, the circuity, in operation, selects performing one of at least two of the procedures defined in claims 4 to 8 or determining the DL pathloss as the most recently measured DL pathloss value according to at least one of a UE capability and higher layer configuration of the UE.

According to a 24-th aspect, further to any of the 15-th to 23-th aspect, the circuity, in operation, determines at least one of a physical uplink shared channel, PUSCH, transmission power, a physical uplink control channel, PUCCH, transmission power, a physical random access channel, PRACH, transmission power and a sounding reference signal, SRS, transmission power based on the determined UL pathloss.

According to an 25-th aspect, further to any of the 15-th to 24-th aspect, the circuity, in operation, calculates power headroom, PH, based on the determined UL pathloss and/or triggers power headroom reporting, PHR, when the determined UL pathloss differs from a previously determined UL pathloss by more than a threshold.

According to a 26-th aspect, further to any of the 15-th to 25-th aspect, the one or more measured DL pathloss values are measured for a pathloss of a DL from a base station to the UE and the UL pathloss is determined for a UL from the UE to a transmission reception point, TRP, different from the base station.

According to a 27-th aspect, a method of configuring a user equipment device, UE, carried out by a base station, comprising the steps of determining a configuration for a user equipment, UE, device; determining a pathloss offset value; and transmitting the determined configuration to the UE device; and wherein the configuration is determined by the BS to cause the UE device to select performing one of at least two of the following procedures:
A) identifying the measured DL pathloss value of a set of one or more measured DL pathloss values that is measured at a time closest to a time at which the pathloss offset value is determined by the BS; and
   determining a DL pathloss as the identified measured DL pathloss value of the set of one or more measured DL pathloss values;
B) identifying the measured DL pathloss value of a set of one or more measured DL pathloss values that is measured at a time closest to the time at which the pathloss offset value and later than the time at which the pathloss offset value is determined by the BS;
C) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
D) determining a DL pathloss as an average of measured pathloss values of a set of one or more measured DL pathloss values;
E) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined by the BS; and
F) determining a DL pathloss as a measured DL pathloss value.

According to a 28-th aspect, a computer program is provided stored on a non-transitory medium which when executed on one or more processors causes the one or more processors to perform any of the above mentioned methods.

According to a 29-th aspect, an intergrated circuit, IC, is provided comprising an interface to a transceiver and circuitry. The interface is configured to receive reference signals (from the transceiver). The circuitry, in operation, determines a downlink, DL, pathloss based on a set of one or more DL pathloss values measured from the reference signals, wherein the set of one or more measured DL pathloss values comprises at least one measured DL pathloss value different from a most recently measured DL pathloss value; and determines an uplink, UL, pathloss based on the determined DL pathloss.

According to a 30-th aspect, an intergrated circuit, IC, is provided comprising circuitry which, in operation, determines a configuration for a user equipment, UE, device; and determines a pathloss offset value. The IC also comprises an interface to a transmitter which, in operation, transmits the determined configuration to the UE. The configuration is determined by the BS to cause the UE to select performing one of at least two of the following procedures:
A) identifying the measured DL pathloss value of a set of one or more measured DL pathloss values that is measured at a time closest to a time at which the pathloss offset value is determined by the BS; and determining a DL pathloss as the identified measured DL pathloss value of the set of one or more measured DL pathloss values;
B) identifying the measured DL pathloss value of a set of one or more measured DL pathloss values that is measured at a time closest to the time at which the pathloss offset value and later than the time at which the pathloss offset value is determined by the BS;
C) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
D) determining a DL pathloss as an average of measured pathloss values of a set of one or more measured DL pathloss values;
E) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein 0≤q≤1 and t_{update} is the time at which the pathloss offset value is determined by the BS; and
F) determining a DL pathloss as a measured DL pathloss value;
   for determining an uplink, UL, pathloss based on the determined DL pathloss.

## Claims

1. A user equipment, UE, device, comprising
a transceiver which, in operation, receives reference signals;
circuitry which, in operation,
determines a downlink, DL, pathloss based on a set of one or more DL pathloss values measured from the reference signals, wherein the set of one or more measured DL pathloss values comprises at least one measured DL pathloss value different from a most recently measured DL pathloss value; and
determines an uplink, UL, pathloss based on the determined DL pathloss.

2. The UE device according to claim 1, further comprising
a memory that stores a set of N measured DL pathloss values, wherein N is a positive integer defined by at least one of a UE capability and higher layer configuration of the UE; and
wherein said set of one or more measured DL pathloss values is a subset of the set of N measured DL pathloss values.

3. The UE device according to claim 1 or 2, wherein the circuity, in operation, determines the UL pathloss by comparing a pathloss offset value determined and provided by a network device and the determined DL pathloss.

4. The UE device according to claim 3, wherein the circuity, in operation,
identifies the measured DL pathloss value from the set of one or more measured DL pathloss values as the one that is measured at a time closest to the time at which the pathloss offset value is determined; and
determines the DL pathloss as the identified measured DL pathloss value of the set of one or more measured DL pathloss values.

5. The UE device according to claim 3, wherein the circuity, in operation,
identifies the measured DL pathloss value of the set of one or more measured DL pathloss values that is measured at a time closest to the time at which the pathloss offset value and later than the time at which the pathloss offset value is determined.

6. The UE device according to claim 3, wherein the DL pathloss is determined based on the a set of one or more measured DL pathloss values consisting of DL pathloss values measured in a time interval tₛₜₐᵣₜ ≤ t_{update} ≤ t_{finish}, wherein tₛₜₐᵣₜ and t_{finish} are defined by at least one of a UE capability and a higher layer configuration of the UE, and t_{update} denotes the time at which the pathloss offset value is determined.

7. The UE device according to claims 1 to 3 or 6, wherein the circuity, in operation, determines the DL pathloss as an average of the measured pathloss values of the set of one or more measured DL pathloss values.

8. The UE device according to claim 1 to 3 or 6 wherein the circuity, in operation, determines the DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein q is a number from an interval [0,1] and t_{update} is the time at which the pathloss offset value is determined.

9. The UE device according to any of claims 1 to 8, wherein the circuity, in operation, selects performing one of at least two of the procedures defined in claims 4 to 8 or determining the DL pathloss as the most recently measured DL pathloss value according to at least one of a UE capability and higher layer configuration of the UE.

10. The UE device according to any of claims 1 to 9, wherein the circuity, in operation, determines at least one of a physical uplink shared channel, PUSCH, transmission power, a physical uplink control channel, PUCCH, transmission power, a physical random access channel, PRACH, transmission power and a sounding reference signal, SRS, transmission power based on the determined UL pathloss.

11. The UE device according to any of claims 1 to 10, wherein the circuity, in operation, calculates power headroom, PH, based on the determined UL pathloss and/or triggers power headroom reporting, PHR, when the determined UL pathloss differs from a previously determined UL pathloss by more than a threshold.

12. The UE device according to any of claims 1 to 11, wherein the one or more measured DL pathloss values are measured for a pathloss of a DL from a base station to the UE and the UL pathloss is determined for a UL from the UE to a transmission reception point, TRP, different from the base station.

13. Base station, BS, comprising
circuitry which, in operation,
determines a configuration for a user equipment, UE, device; and
determines a pathloss offset value;
and
a transmitter which, in operation,
transmits the determined configuration to the UE; and
wherein the configuration is determined by the BS to cause the UE to select performing one of at least two of the following procedures:
G) identifying the measured DL pathloss value of a set of one or more measured DL pathloss values that is measured at a time closest to a time at which the pathloss offset value is determined by the BS; and
determining a DL pathloss as the identified measured DL pathloss value of the set of one or more measured DL pathloss values;
H) identifying the measured DL pathloss value of a set of one or more measured DL pathloss values that is measured at a time closest to the time at which the pathloss offset value and later than the time at which the pathloss offset value is determined by the BS
I) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
J) determining a DL pathloss as an average of measured pathloss values of a set of one or more measured DL pathloss values;
K) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein q is a number from an interval [0,1] and t_{update} is the time at which the pathloss offset value is determined by the BS; and
L) determining a DL pathloss as a measured DL pathloss value;
for determining an uplink, UL, pathloss based on the determined DL pathloss.

14. Method of determining an uplink, UL, pathloss carried out by a user equipment, UE, device, comprising the steps of
receiving reference signals;
determining a downlink, DL, pathloss based on a set of one or more DL pathloss values measured from the reference signals, wherein the set of one or more measured DL pathloss values comprises at least one measured DL pathloss value different from a most recently measured DL pathloss value; and
determining an uplink, UL, pathloss based on the determined DL pathloss.

15. Method of configuring a user equipment device, UE, carried out by a base station, comprising the steps of
determining a configuration for a user equipment, UE, device;
determining a pathloss offset value;
and
transmitting the determined configuration to the UE device; and
wherein the configuration is determined by the BS to cause the UE device to select performing one of at least two of the following procedures:
G) identifying the measured DL pathloss value of a set of one or more measured DL pathloss values that is measured at a time closest to a time at which the pathloss offset value is determined by the BS; and
determining a DL pathloss as the identified measured DL pathloss value of the set of one or more measured DL pathloss values;
H) identifying the measured DL pathloss value of a set of one or more measured DL pathloss values that is measured at a time closest to the time at which the pathloss offset value and later than the time at which the pathloss offset value is determined by the BS;
I) determining a DL pathloss based on a set of measured DL pathloss values measured in a time interval tₛₜₐᵣₜ ≤ t_{update} ≤ t_{finish}, wherein tₛₜₐᵣₜ and t_{finish} are defined by at least one of a UE capability and higher layer configuration of the UE and t_{update} denotes the time at which the pathloss offset value is determined by the BS;
J) determining a DL pathloss as an average of measured pathloss values of a set of one or more measured DL pathloss values;
K) determining a DL pathloss as a weighted average of the measured pathloss values of the set of one or more measured DL pathloss values, and wherein weights applied to DL pathloss values measured at time instances tₙ are proportional to *q*^{(|*tn-tupdat*|)}, wherein q is a number from an interval [0,1] and t_{update} is the time at which the pathloss offset value is determined by the BS; and
L) determining a DL pathloss as a measured DL pathloss value.
